# EUROPEAN PATENT SPECIFICATION

(11) **EP 3 830 682 B1**
(45) Date of publication and mention of the grant of the patent: **03.09.2025**
(21) Application number: 19876177.7
(22) Date of filing: 30.09.2019
(51) Int. Cl.: G06F 3/14, G06F 3/0481, G06K 19/06, G06V 10/24, G06V 20/20

(54) **ELECTRONIC DEVICE AND CONTROL METHOD THEREOF**
ELEKTRONISCHE VORRICHTUNG UND STEUERUNGSVERFAHREN DAFÜR
DISPOSITIF ÉLECTRONIQUE ET SON PROCÉDÉ DE COMMANDE

(30) Priority: 26.10.2018 KR 20180129317
(43) Date of publication of application: 09.06.2021
(73) Proprietor: Samsung Electronics Co., Ltd., Suwon-si, Gyeonggi-do 16677 (KR)
(72) Inventor: KIM, Kwanmi, Suwon-si Gyeonggi-do 16677 (KR); KIM, Sanghyun, Suwon-si Gyeonggi-do 16677 (KR); YANG, Minseok, Suwon-si Gyeonggi-do 16677 (KR)
(74) Representative: Appleyard Lees IP LLP
(86) International application number: PCT/KR2019/012697
(87) International publication number: WO 2020/085666

(56) References cited:
- JP-A- 2008 281 718
- KR-A- 20130 124 101
- KR-A- 20140 126 606
- KR-A- 20160 016 523
- US-A1- 2013 293 443
- US-A1- 2014 193 037
- US-A1- 2014 293 017
- US-A1- 2015 279 037
- US-A1- 2015 279 037
- US-A1- 2018 024 800

## Description

### Technical Field

The disclosure relates to an electronic device which automatically identifies a layout of a video wall and a control method thereof.

### Background Art

In general, a display device displays an image on a screen. By using the display device, various functions may be embodied. One of the functions is a video wall. A function of the video wall refers to a function of recognizing a plurality of display devices as one screen and enlarging an image into 1X4, 2X2, 3X3, and 4X4 to display the image. The function of the video wall may be used to allow a user to visually recognize an image displayed on a screen at a glance by enlarging one image into the plurality of display devices to display. Such video wall function may be used at a conference room, a presentation, at an exhibition hall, in traffic condition, in securities businesses, or the like.

A video wall is configured in view of the number of display devices, a scenario desired to be displayed, a model of a displayed set, a locational configuration of the set, or the like. However, it is not easy for a user to configure the video wall in consideration of all of them. For example, there has been an inconvenience to set a video wall individually in view of a layout and identification information of a plurality of display devices configuring the video wall.

US 2014/293017 A1 describes multiple electronic displays arranged to define an ensemble of the user's choosing. US 2015/279037 A1 describes a system for identifying, placing and configuring a physical arrangement of a plurality of displays via image analysis of captured digital camera images depicting unique configuration images output to said displays to facilitate uniform operation of said plurality of displays as a single display area for example as a video wall. US 2014/193037 A1 describes moving and/or still image(s) aligned to multiple display devices. US 2018/024400 A1 describes systems and methods that allow a display device array to be used to present content to one or more users. US 2013/293443 A1 describes an automatic detection method of an arrangement of a video wall including a plurality of monitors and a video wall system.

### Disclosure of Invention

### Technical Problem

Various embodiments of the disclosure provide an electronic device that automatically identifies layout and identification information of a plurality of display devices forming a video wall, thereby reducing a human error and increasing user convenience, and a control method thereof.

### Solution to Problem

The invention is defined by the appended set of claims.

### Advantageous Effects of Invention

According to the various embodiments the layout and the identification information of the video wall based on a photographed image without any additional operation of a user, improves convenience and accuracy of the user.

### Brief description of Drawings

FIG. 1 is an exemplary view illustrating an electronic system according to an embodiment;
FIG. 2A is an exemplary view illustrating an operation of an electronic device according to an embodiment;
FIG. 2B is an exemplary view illustrating a configuration of an electronic device according to an embodiment;
FIG. 3A is an exemplary view illustrating an identification image according to an embodiment;
FIG. 3B is an exemplary view illustrating an identification image according to an embodiment;
FIG. 3C is an exemplary view illustrating an identification image implemented with a border symbol;
FIG. 4A is an exemplary view illustrating a plurality of display devices forming a video wall according to an embodiment;
FIG. 4B is an exemplary view illustrating a UI for setting contents of a video wall based on arrangement state information of a plurality of display devices according to an embodiment;
FIG. 5A is an exemplary view illustrating a UI for setting contents of a video wall including a plurality of display devices according to an embodiment;
FIG. 5B is an exemplary view illustrating a UI for setting contents of a video wall including a plurality of display devices according to an embodiment;
FIG. 6A is an exemplary view illustrating an electronic system which includes an electronic device and a plurality of display device according to an embodiment;
FIG. 6B is an exemplary view illustrating an electronic system which includes an electronic device, plurality of display device and an external device according to an embodiment;
FIG. 7 is an exemplary view illustrating a control method of an electronic device according to an embodiment.

### Best Mode

### Mode for Invention

Hereinafter, the present disclosure will be described more fully with reference to the accompanying drawings.

Terms used in the present specification will be briefly explained, and the present disclosure will be described in greater detail.

The terms used in embodiments of the present disclosure are selected as general terminologies currently widely used in consideration of the configuration and functions of the present disclosure, but can be different depending on intention of those skilled in the art, a precedent, appearance of new technologies, and the like. Further, in specific cases, terms may be arbitrarily selected. In this case, the meaning of the terms will be described in the description of the corresponding embodiments. Accordingly, the terms used in the description should not necessarily be construed as simple names of the terms, but be defined based on meanings of the terms and overall contents of the present disclosure.

The embodiments of the present disclosure may vary, and may be provided in different embodiments. Specific embodiments will be described with reference to accompanying drawings and be described in detail in the specific description. However, this does not necessarily limit the scope of specific embodiments forms. Instead, modifications, equivalents and replacements included in the disclosed concept and technical scope of this specification may be employed. While describing embodiments, if it is determined that the specific description regarding a known technology obscures the gist of the disclosure, the detailed description may be omitted.

Singular forms are intended to include plural forms unless the context clearly indicates otherwise. In the present application, the terms "include" and "comprise" designate the presence of features, numbers, steps, operations, components, elements, or a combination thereof that are written in the specification, but do not exclude the presence or possibility of addition of one or more other features, numbers, steps, operations, components, elements, or a combination thereof.

The expression at least one of A and/or B represents any one of either "A" or "B" or "A and B".

The expression "1", "2", "first", or "second" as used herein may be used with a variety of elements and/or functions without limiting the elements and/or functions, irrespective of order and/or importance thereof, and only to distinguish one element and/or functions from another.

When an element (e.g., a first element) is "operatively or communicatively coupled with/to" or "connected to" another element (e.g., a second element), an element may be directly coupled with another element or may be coupled through the other element (e.g., a third element).

In the present disclosure, a 'module' or a 'unit' performs at least one function or operation and may be implemented as hardware or software or a combination of the hardware and the software. In addition, a plurality of 'modules' or a plurality of 'units' may be integrated into at least one module and may be at least one processor except for 'modules' or 'units' that should be realized in a specific hardware. Also, the term "user" may refer to a person who uses an electronic apparatus or an apparatus (e.g., an artificial intelligence (AI) electronic apparatus) that uses the electronic apparatus.

The embodiments of the present disclosure will be described in greater detail below in a manner that will be understood by one of ordinary skill in the art. However, the present embodiments may be realized in a variety of different configurations, and not limited to descriptions provided herein. Also, well-known functions or constructions are not described in detail since they would obscure the invention with unnecessary detail.

Hereinafter, the embodiments of the disclosure will be described more fully with reference to the drawings.

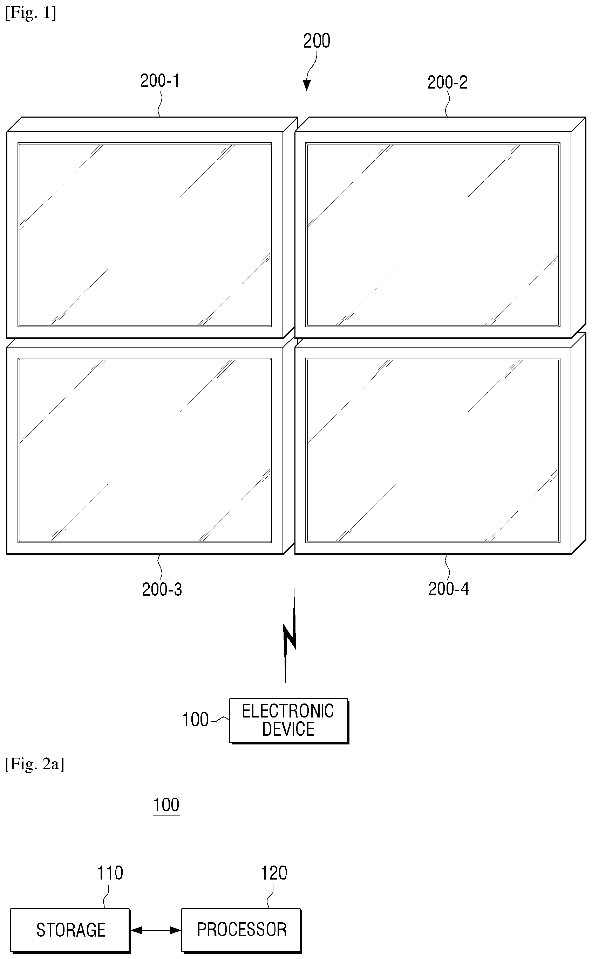

FIG. 1 is a diagram illustrating an electronic system according to an embodiment.

An electronic system 1000 includes an electronic device 100 and a plurality of display devices 200 forming a video wall.

According to an embodiment, the electronic device 100 is a device that obtains layout information, or the like, of a video wall from a photographed image of the video wall including the plurality of display device 200, and may be implemented as a device including, for example, and without limitation, a camera that may photograph the video wall including the plurality of display devices 200. For example, the electronic device 100 may be implemented as various electronic devices including, for example, and without limitation, a smartphone, a tablet PC, a mobile phone, a desktop PC, a laptop PC, a netbook computer, a PDA, a portable multimedia player(PMP), a MP3 player, a camera, a wearable device, or the like. According to another embodiment, the electronic device 100 may be implemented as a device receiving a photographed image of the video wall from an external camera and obtaining layout information of the video wall from the received image.

The plurality of display devices 200 form a video wall. The video wall is a system that recognizes the plurality of display devices as one screen, and may divide an image into a plurality of images, enlarge and display the divided images to display on the screen.

For example, as illustrated in FIG. 1, the plurality of display devices (200-1 to 200-4) are arranged in the form of 2 by 2 (2x2). That is, the plurality of display devices are arranged such that there are two display devices horizontally and two display devices vertically. This is merely an example for convenience of description, and a total number and an arrangement of display devices forming the video wall may be variously changed.

In order to control the video wall including the plurality of display devices 200, obtaining layout information of arranged plurality display devices 200 and identification information of the plurality of display devices 200 is required. Hereinafter, various embodiments will be described in detail with reference to figures of the present disclosure.

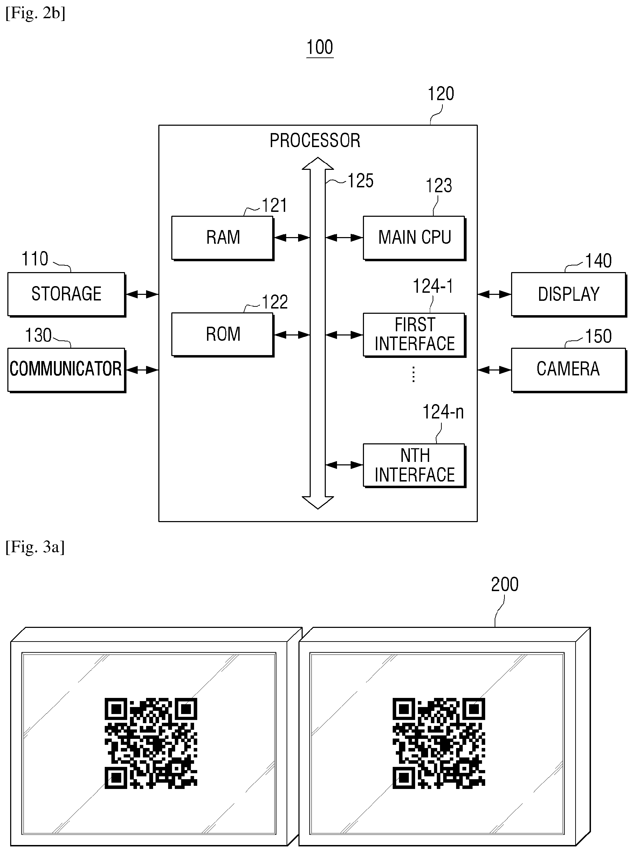

FIG. 2 is a block diagram illustrating an operation of an electronic device according to an embodiment.

Referring to FIG. 2A, the electronic device 100 includes a storage 110 and a processor 120.

The storage 110 stores various data necessary for operating the electronic device 100.

The storage 110 may be implemented as an internal memory such as a ROM (e.g., electrically erasable programmable read-only memory (EEPROM)), a RAM, or the like, included in the processor 120, or may be implemented as a separate memory from the processor 120. In this case, the storage 110 may be implemented in a form of a memory embedded in the electronic device 100 or a detachable memory from the electronic device 100 depending on a purpose of data storage. Meanwhile, the memory embedded in the electronic device 100 may be implemented in a form of a non-volatile memory, a volatile memory, a hard disk drive (HDD), a solid state drive (SSD), or the like.

For example, the storage 110 may store mapping information in which identification information and an identification image of the plurality of display devices 200 are mapped. The identification information may include information of a product name, a model name, a Mac Address, and the like of each of the plurality of display devices 200. In addition, the identification image may be an image displayed in one area of the display devices 200 as an image representing an ID of the display devices 200. For example, the identification image may include at least one of a QR code, a corner symbol, a border symbol, or a bar code, and this will be described in detail below.

The storage 110 may also store information of a screen shape, a screen size, and a bezel size of the display devices 200. In addition, the storage 110 may store a photographed image of the display devices 200.

The storage 110 may receive mapping information where identification information and identification image of the plurality of display devices 200 are mapped from the plurality of display devices 200 and store the mapping information, or may receive the mapping information from an external server (not shown), and store the same.

The processor 120 controls overall operations of the electronic devices 100.

According to an embodiment, the processor 120 may be implemented as a distal signal processor (DSP) which processes a digital signal, a microprocessor, or a time controller (TCON), but this is not limited thereto. The processor 120 may include, for example, and without limitation, one or more of a central processing unit (CPU), a micro controller unit (MCU), a micro processing unit (MPU), a controller, an application processor (AP), or a communication processor (CP), an advanced reduced machine (ARM) processor, or the like, or may be defined as a corresponding term. Also, the processor 120 may be implemented as a system on chip (SoC) or a large scale integration (LSI) with a processing algorithm therein, or as in a form of a field programmable gate array (FPGA). The processor 120 may perform various functions by executing computer executable instructions stored in the storage 110.

According to an embodiment, the processor 120 may obtain a photographed image of a video wall including the plurality of display devices 200 displaying an identification image. The video wall may be a system that recognizes the plurality of display devices 200 as one screen. The video wall may divide an image into a plurality of images, enlarge and display the divided plurality of images to display. The processor 120 may obtain the photographed image of the video wall through a camera (not shown) included in the electronic device 100, or may obtain the photographed image by receiving it from the video wall, or from an external camera (not shown).

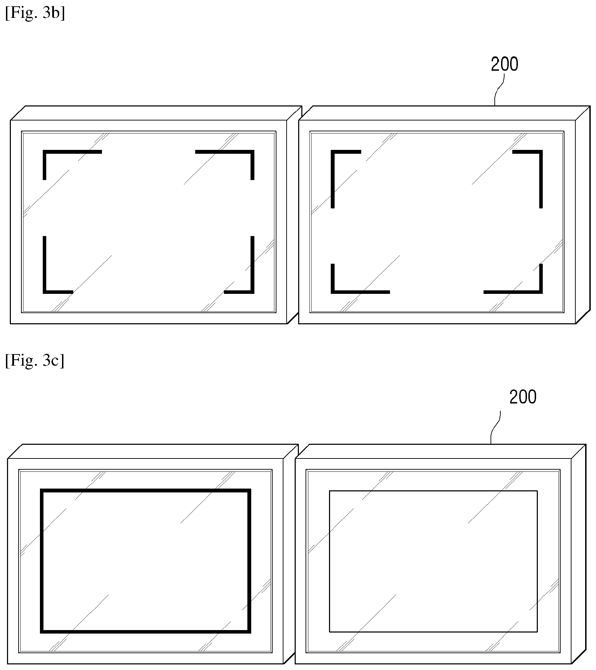

The identification image displayed by each of the plurality of display devices 200 is an image representing an ID of the display device 200, and may be an image displayed in one area of each of the plurality of display devices 200. For example, the identification image may include at least one of a QR code, a corner symbol, a border symbol, or a bar code, and this will be described in FIG. 3.

FIG. 3 is a diagram illustrating an identification image according to an embodiment.

Each of the plurality of display devices 200 may display an identification image based on a predetermined event. The predetermined event may be at least one of an event that the plurality of display devices 200 enter into an identification image display mode, an event that the plurality of display devices 200 are connected to an external server, an event that a predetermined button of the electronic device 100 is pressed and operated, or an event that a power of the plurality of display devices 200 is turned on. When the predetermined event occurs, the plurality of display devices 200 may display the identification image in one area of each screen for a predetermined time.

FIG. 3A is a diagram illustrating a case in which an identification image is implemented as a QR code.

As shown in FIG. 3A, each of the plurality of display devices 200 may display QR codes which are different from each other in one area of a screen based on a predetermined event. The QR code refers to a plaid code that may include various data.

The processor 120 may obtain a QR code corresponding to each of the plurality of display devices 200 from a photographed image, and may obtain identification information of each of the plurality of display devices based on the obtained QR code. For example, the processor 120 may obtain a product name, a model name, a Mac address of each of the plurality of display devices 200 based on the obtained QR code. Also, the processor 120 may obtain information including a screen shape, a screen size, and a bezel size of the plurality of display devices based on the obtained QR code. Also, the processor 120 may identify whether the plurality of display devices 200 are in a regular arrangement state or an irregular arrangement state based on the obtained QR code. The regular arrangement may be a display configuration having a rectangular shape of a predetermined aspect ratio (e.g., 2x2, 3x1 and 3x2), and the irregular arrangement may not be a rectangular shape, but may be a display configuration configured arbitrarily by a user, or a display configuration that the plurality of display devices 200 are superimposed.

FIG. 3B is a diagram illustrating a case that an identification image is implemented as a corner symbol.

The corner symbol, as shown in FIG. 3B, may be a symbol displayed in a corner area of each of the plurality of display devices 200. That is, the corner symbol may be a predetermined image displayed in the corner area of a screen of the display devices. For example, in case of a rectangular display device, a corner symbol may be displayed on four corner areas.

The corner symbol may be distinguished based on at least one of size, shape or arrangement location. That is, the corner symbol may be mapped to display devices which are different from each other based on at least one of size, shape or arrangement location.

A shape of the corner symbol may be implemented in various shapes such as a crook shape, a straight line shape, a triangle shape, a square shape, or the like. For example, a crook-shaped corner symbol may refer to a display device having a model name of Q1, and a triangle-shaped corner symbol may refer to a display device having a model name of Q2. The corner symbol may be distinguished based on its length or size, even if it is a symbol having the same shape.

For example, a model name of Q3 may be referred to as a display device having corner symbols of upper left and upper right are 10cm in width and 5cm in length as a straight line, and corner symbols of lower left and lower right are 5cm in width and 10cm in length. A model name Q4 may be referred to as a display device having corner symbols of upper left and upper right are 10cm in width and 5cm in length, and corner symbols of lower left and lower right are 5cm in width and 10cm in length. As such, a predetermined identification image may be mapped to represent a specific display device.

The processor 120 may identify whether the plurality of display devices 200 are in a regular arrangement state or an irregular arrangement state based on an identification image obtained from a photographed image. For example, if four corner symbols are not identified in one rectangular display device, the processor 120 may identify one area of the display device is superimposed on the other display device, and may identify the plurality of display devices 200 as the irregular arrangement state. The processor 120 may identify the plurality of display devices 200 as the regular arrangement state if all of the four corner symbols are identified and if a screen configuration having a rectangular shape with a predetermined aspect ratio (e.g., 2x2, 3x1, 3x2) is identified.

FIG. 3C is a diagram illustrating a case that an identification image is implemented with a border symbol.

The border symbol, as described in FIG. 3C may be a symbol displayed in a border area of each of the plurality of display devices 200. That is, the border symbol may be a predetermined image displayed in the border area of a screen of the display device. For example, in a case of a rectangular shape of a display device, the border symbol of the rectangular shape may be displayed.

The border symbol may be distinguished based on at least one of size, shape, or arrangement location of a display device. That is, the border symbol may be mapped to display devices which are different from each other based on at least one of size, shape, or arrangement location. For example, the border symbol may be distinguished according to a size (thickness) of symbols.

A shape of the border symbol may be determined based on a shape of a display device. Since the display device is generally implemented with a rectangular shape, the border symbol may be implemented with a rectangular shape. However, even if the display device is implemented with the rectangular shape, the border symbol may be implemented with various shapes such as a circular shape.

The processor 120 may identify whether the plurality of display devices 200 are in a regular arrangement state or an irregular arrangement state based on the border symbol obtained from a photographed image. For example, when a disconnected border symbol is identified on one rectangular display device, the processor 120 may identify one area of one display device is superimposed on another display device, and may identify the plurality of display devices 200 as the irregular arrangement state. The processor 120 may identify the plurality of display device 200 as the regular arrangement state if a border symbol without disconnection and if a screen configuration having a rectangular shape with a predetermined aspect ratio (e.g., 2x2, 3x1, 3x2) is identified.

FIG. 3 describes a QR code, a corner symbol and a border symbol as an example of an identification image, but this is not limited thereto. An image representing an ID of the display devices, such as a barcode, may be implemented as various shapes.

Referring to FIG. 2, the processor 120 may obtain layout information of the video wall from a photographed image.

The layout information may include the number and arrangement information of the display devices 200. The arrangement information may include a regular arrangement and an irregular arrangement. The regular arrangement may be a screen configuration having a rectangular shape with a predetermined aspect ratio (e.g., 2x2, 3x1, 3x2), and the irregular arrangement may not be a rectangular shape but be a screen configuration configured arbitrarily by a user, or a screen configuration in which the plurality of display devices 200 are superimposed.

For example, the processor 120 may obtain layout information of the video wall from a photographed image through an image recognition technique. For example, the processor 120 may explore an entire area of the photographed image through a window sliding technique and obtain the layout information of the video wall. For instance, the processor 120 may divide the entire area of the photographed image into n*m blocks. The processor 120 may scan each block using a window with a predetermined size to obtain a feature value of each block. The processor 120 may compare the obtained feature value of each block to obtain layout information including the number, arrangement information, and the like, of the display devices 200. For example, the processor 120 may obtain layout information in which the number of the plurality of display devices 200 are four and the devices are in a regular arrangement of 2 by 2 2 (2x2). The window sliding technique may be an example of the image recognition technique, and use various embodiments that obtain layout information of the video wall using an artificial neural network.

The processor 120 may obtain an identification image corresponding to each of the plurality of display devices 200 and obtain identification information of each of the plurality of display devices 200 based on mapping information and the identification image.

For example, when the identification image is implemented as a QR code, the processor 120 may obtain identification information based on the identification image through a QR code reader. When the identification image is implemented as a corner symbol, the processor 120 may obtain the identification image based on at least one information of size, shape, and display position of the corner symbol, and then the processor 120 may obtain the identification information of each of the plurality of display devices 200 by comparing mapping information to which the identification image is mapped and information of the obtained identification image. The identification information may include a product name, a model name, and a Mac address of each of the plurality of display devices.

For example, it is assumed that an identification image having a feature that an upper left and upper right corner symbols are 10cm in width and 5cm in length, and a lower left and lower right corner symbols are 5cm in width and 10cm in length, is mapped to a display device having a model name of Q1. Such mapping information may be stored in the storage 110.

When an identification image obtained from a photographed image has a corner symbol in which an upper left and upper right symbols are 10cm in width and 5cm in length, and a lower left and lower right symbols are 5cm in width and 10cm in length, the processor 120 may identify, based on the mapping information mapped to such identification image, that a corresponding display device is a display device having the model name of Q1.

The processor 120 may obtain arrangement state information of the plurality of display devices 200 included in the video wall based on the obtained identification information and layout information. The arrangement state information may refer to information including layout information and identification information of the plurality of display devices 200. For example, it is assumed that the plurality of display devices 200 are formed as 2 by 2 (2x2). The arrangement state information refers to information including not only layout information that an arrangement of the video wall is formed as 2 by 2 (2x2), but also identification information that an upper left of the display device is a display device having a model name of Q1.

According to an embodiment, the processor 120 may obtain information including a screen shape, a screen size, and a bezel size of a corresponding display devices based on the obtained identification information, and may obtain an arrangement state information of the plurality of display devices based on the obtained information and the layout information.

For example, the processor 120 may receive information including a screen shape, a screen size, and a bezel size of a display device corresponding to an identified model name based on the obtained identification information. When information including a screen shape, a screen size and a bezel size of various display devices is stored in the storage 110, the processor 120 may obtain information including a screen shape, a screen size and a bezel size of a corresponding display device from the storage 110, based on the obtained identification information. The processor 120 may obtain information including a screen shape, a screen size, and a bezel size to obtain accurate arrangement state information of the plurality of display devices 200.

For example, it is assumed that the arrangement state information of the plurality of display devices 200 is obtained from a photographed image. In this case, if the video wall including the plurality of display devices 200 is photographed from the side and not being photographed at the front, a size information of the display device may be in accurate. Accordingly, the processor 120 may obtain accurate arrangement state information of the plurality of display devices 200 based on information including a screen shape, a screen size and a bezel size, and layout information.

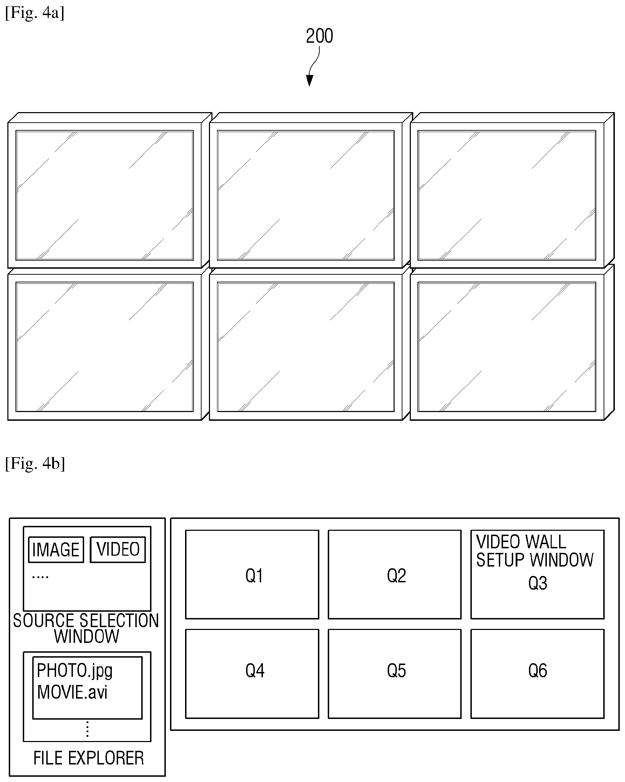

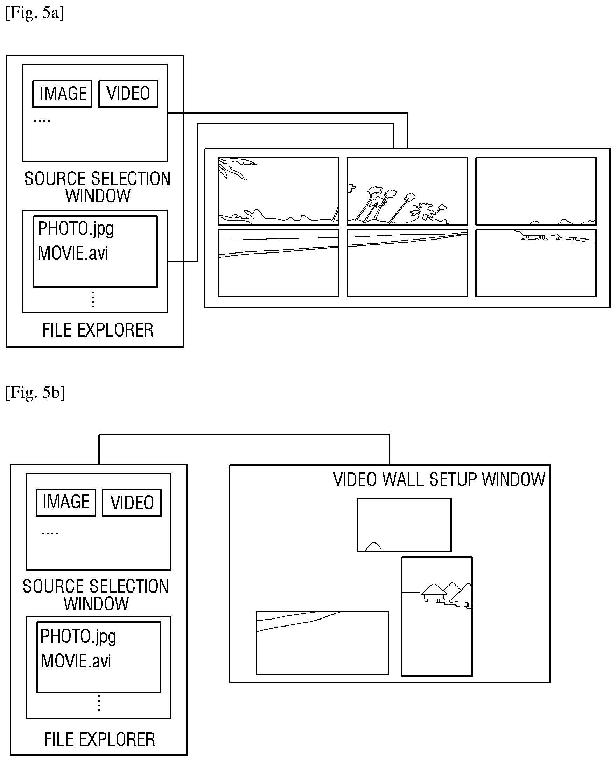

The processor 120 may control a display (not shown) to display a UI for setting contents of the video wall based on the arrangement state information of the plurality of display devices 200. The UI for setting contents of the video wall will be described with reference to FIGS. 4 and 5.

FIGS. 4 and 5 are diagrams illustrating a UI for setting contents of a video wall according to an embodiment.

FIG. 4A is a diagram illustrating a plurality of display devices forming a video wall arranged on one side, and FIG. 4B is a diagram illustrating a UI for setting contents of a video wall based on arrangement state information of the plurality of display devices 200 arranged in FIG. 4A.

As illustrated in FIG. 4A, it is assumed the plurality of display devices 200 are regularly arranged in the form of 3 by 2 (3x2).

The processor 120 may obtain identification information based on layout information and an identification image from a photographed image of the plurality of display devices 200, illustrated in FIG. 4A, to obtain arrangement state information of the plurality of display devices 200. Since such process has been described, a detailed description may be omitted.

The processor 120 may display the UI for setting contents of the video wall based on the obtained arrangement state information. For example, the processor 120 may display the UI reflected a regular arrangement of 3x2 as the plurality of display devices arranged on one side. In addition, the processor 120 may display the identification information of the display device on the UI. For example, the processor 120 may display identification information such as a product name, a model name, a Mac address, and the like, on an upper left of the display device UI. For example, as illustrated in FIG. 4B, information that a model name of an upper left of a display device is Q1 may be displayed. Accordingly, a user may easily recognize not only layout information that the display devices are regularly arranged in the form of 3 by 2 (3x2), but also identification information of each of the display devices according to an arrangement state.

The UI for setting contents of the video wall may display a video wall setup window, a source selection window for selecting data source to reflect on the video wall system, and a file explorer for searching a corresponding file. Accordingly, users may select data source they want and reflect it on the video wall system.

FIG. 5 is a diagram illustrating a method of applying a selected data source or file to a video wall setup window according to an embodiment.

FIG. 5A is a diagram illustrating a UI for setting contents of a video wall including a plurality of display devices 200 which are regularly arranged. FIG. 5B is a diagram illustrating a UI for setting contents of a video wall including a plurality of display devices 200 which are irregularly arranged.

When the UI for setting contents of the video wall based on an arrangement state information of the plurality of display devices 200, users may apply a source or file that they want to a UI window for setting contents of the video wall using a drag & drop method. Accordingly, the source or file selected by the user may be applied to the UI window for setting the video wall, so that a scenario may be confirmed in advance, and the source or file selected by the user may be displayed on the video wall system when it is actually applied to the video wall system.

Accordingly, the user may easily control the video wall system through the UI window that the arrangement state information is reflected.

Referring to FIG. 2, the processor 120 may identify whether the plurality of display devices 200 are in a regular arrangement state or an irregular arrangement state, and provide candidate contents corresponding to the identified arrangement state on the UI.

According to an embodiment, the processor 120 may identify a state of the plurality of display devices 200 whether they are arranged regularly or irregularly based on at least one of the obtained layout information or identification image. For example, if four corner symbols are not identified in one rectangular-shaped display device, the processor 120 may identify one area of one display device is superimposed on the other display device, and identify the plurality of display devices 200 as an irregular arrangement state. When all of the four corner symbols are identified and a screen configuration having a rectangular shape as a predetermined aspect ratio (e.g., 2x2, 3x1, 3x2) is identified, the processor 120 may identify the plurality of display devices 200 as a regular arrangement state.

Then, the processor 120 may provide candidate contents corresponding to the identified arrangement state. The plurality of display devices arranged regularly are appropriate for displaying an entire image. So, when it is identified that the display devices are in a regular arrangement state, the processor 120 may provide one image or a plurality of images related to each other as the candidate contents. In addition, the plurality of display devices arranged irregularly are appropriate for displaying an individual image, the processor 120 may provide the plurality of images as the candidate contents if it is identified that the devices are irregularly arranged.

FIG. 2B is a block diagram illustrating a detailed configuration of an electronic device 100.

According to FIG. 2B, the electronic device 100 includes a storage 110, a processor 120, a communicator 130, a display 140, and a camera 150. Regarding FIG. 2B, a detailed description regarding parts which are overlapped with FIG. 2A are omitted.

The storage 110 may be implemented in a form of a memory embedded in the electronic device 100 or a removable memory from the electronic device 100 depending on a purpose of data storage. For example, data for operating the electronic device 100 may be stored in the memory embedded in the electronic device 100 and data for an expanded function of the electronic device 100 may be stored in the removable memory from the electronic device 100. The memory embedded in the electronic device 100 may be implemented as at least one of volatile memory (e.g., dynamic RAM (DRAM), static RAM (SRAM), or synchronous dynamic RAM (SDRAM)), non-volatile memory (e.g., one-time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash), hard driver, solid state drive (SSD), or the like, and the removable memory in the electronic device 100 may be implemented as a memory card (e.g., compact flash (CF), secure digital (SD), micro secure digital (Micro-SD), mini secure digital (Mini-SD), extreme digital (xD), multi-media card (MMC)), an external memory (e.g., USB memory) that can be connected to a USB port, or the like.

The processor 120 controls overall operations of the electronic device 100 using various programs stored in the storage 110.

For example, the processor 120 includes a random access memory (RAM) 121, a read only memory (ROM) 122, a main central processing unit (CPU) 123, first through nth interfaces (124-1 to 124-n), and a bus 125.

In this case, the RAM 121, the ROM 122, the main CPU 123, the first to nth interfaces 124-1 to 124-n, and so on may be concatenated with each other through the bus 125.

The ROM 122 stores a set of instructions for system booting. When a turn on instruction is input to supply power, the main CPU 123 copies an O/S stored in the storage 110 to the RAM 121 according to the instruction stored in the ROM 121 and executes the O/S to boot the system. When the booting is completed, the main CPU 123 copies various application programs stored in the storage 110 into the RAM 121, and executes the application programs copied into the RAM 121 to perform various operations.

The main CPU 123 may access to the storage 110 to perform booting using an O/S stored in the storage 110. In addition, the CPU 123 may perform various operations using various programs, content, data, and the like, which are stored in the storage 110.

The first to nth interfaces (124-1 to 124-n) may be concatenated with the aforementioned various components. One of the interfaces may be network interface which is connected to an external device via a network.

The communicator 130 may communicate with an external device (not shown) or with the plurality of display devices 200 forming the video wall. For example, the communicator 130 may perform communication with an external device or external server according to a wired or wireless manner, and may perform communication using various communication methods such as Bluetooth (BT), Wireless Fidelity (WI-FI), Zigbee, Infrared (IR), Serial Interface, Universal Serial Bus (USB), NFC (Near Field Communication), V2X (Vehicle to Everything), mobile communication (Cellular), etc.

The communicator 130 may receive identification information of the plurality of display devices 200 from the external device or the external server. In addition, the communicator 130 may receive information including a screen shape, a screen size, and a bezel size of the plurality of display devices 200 based on the identification information according to a control of the processor 120. Also, the communicator 130 may receive a photographed image of the video wall from an external camera.

The display 140 is a configuration for displaying various contents. Particularly, the display 140 may display a UI for setting the video wall contents. For example, the display 140 may display a UI window referring to arrangement state information of the plurality of display devices actually arranged based on the identification information and the layout information according to the control of the processor 120.

The display 130 may be implemented as various forms such as liquid crystal display (LCD), organic light-emitting diode (OLED), Liquid Crystal on Silicon (LCoS), Digital Light Processing (DLP), quantum dot (QD), Micro light-emitting diode (Micro LED) display, and the like. For example, the display 140 may be implemented as a touch screen having a mutual layer structure with a touch pad. In this case, the display 140 may be used as a user interface (not shown) in addition to an output device. The touch screen may be configured to detect a touch input pressure as well as a touch input position and size

The electronic device 100 may not include the display 140 separately, and may be connected to the external device through the interface (not shown) to transmit a display signal to the external display device.

The camera 150 may photograph an object according to a user command to obtain an image. For example, the camera 150 may photograph the video wall including the plurality of display devices 200 and may obtain an image. The user command may be various such as a touch input, a button input, a voice input, a motion input, and the like.

When the object is photographed through the camera 150, the object may be converted into an electrical image signal through semiconductor optical element, Charge Coupled Device (CCD) or Complementary Metal Oxide Semiconductor (CMOS), and the converted image signal is converted from an analog signal processor (not shown) to an amplified or a digital signal. The converted digital signal may be subjected to digital signal processing in a digital signal processing unit (not shown), and may be displayed through the display 140 by adjusting its color and brightness according to a control of the processor 120.

The displayed image may be a still image or a moving image. The camera 150 may photograph the still image at a specific point of time or may continuously photograph the still image.

The electronic device 100 may not include the camera 150 separately, and may receive the photographed image from an external camera.

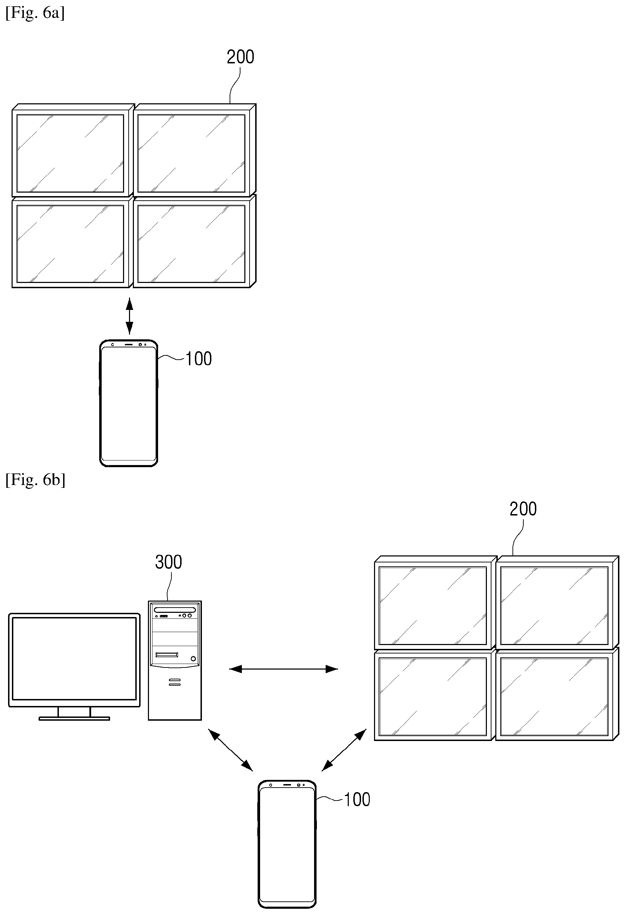

FIG. 6 is a diagram illustrating a relation between a plurality of display devices and an external device according to various embodiments

According to an embodiment, an electronic system 1000, as illustrated in FIG. 6A may include an electronic device 100 and the plurality of display device 200. The electronic device 100 may be a device capable of photographing, including the camera 150, the plurality of display devices 200 forming the video wall by itself. For example, the electronic device 100 may be implemented as a smartphone, a tablet PC, a mobile phone, a desktop PC, a laptop PC, a netbook computer, a PDA, a portable multimedia player (PDA), a MP3 player, a camera, a wearable device, or the like. The electronic device 100 may receive a photographed image of the plurality of display devices 200 forming the video wall from the external camera, and may be implemented as a device obtaining the layout information of the video wall from the received image. For example, the electronic device 100 may be implemented as a PC, a laptop, a smartphone, a table, or the like. Although the electronic device 100 is described as a smartphone in FIG. 6A, this is merely an embodiment.

According to another embodiment, the electronic system 1000 may include the electronic device 100, the plurality of display devices 200, or the external device 300, as described in FIG. 6B.

The plurality of display devices 200 may transmit the identification information of each of the display devices to the external device. Then, the electronic device 100 may receive the identification information of each of the plurality of display devices 200 from the external device 300 to store the identification information. The electronic device 100 may obtain the arrangement state information of the plurality of display devices 200 based on the photographed image of the plurality of display devices and the stored identification information. Then, the electronic device 100 may transmit the arrangement state information to the external device 300. That is, the processor 120 may control the communicator 130 in order to transmit the obtained arrangement state information to the external device 300 controlling an operation of the video wall. The external device 300 may display a UI for setting the video wall contents based on the received arrangement state information of the plurality of display devices. The external device 300 may control the video wall including the plurality of display devices 200, such as displaying a specific content on the plurality of display devices 200 based on an input user command.

In addition, the electronic device 100 may photograph an image of the plurality of display devices 200 and may transmit the photographed image to the external device 300. Then, the external device 300 may obtain the arrangement state information based on the identification information of the plurality of display devices 200 and the layout information of the video wall. That is, the electronic device 200 may perform simply as a camera device photographing an image of the plurality of display devices, and may be performed the operation of the processor 120, described in FIG. 2, in the external device 300.

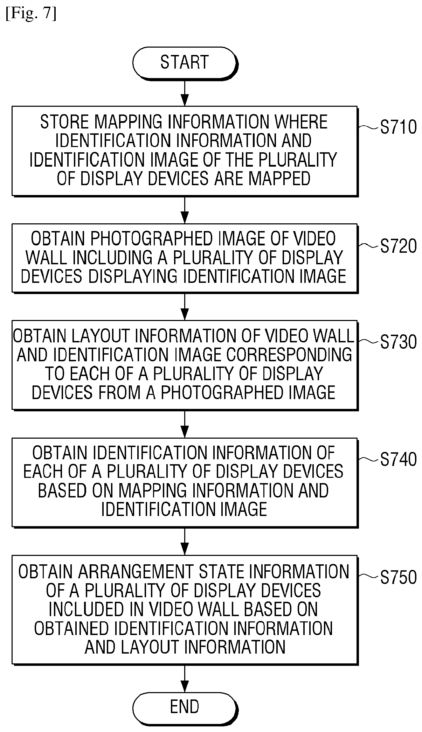

FIG. 7 is a flowchart illustrating a control method of an electronic device according to an embodiment.

The electronic device 100 may store mapping information that identification information and an identification image of each of a plurality of display devices 200 are mapped. The identification information may include information of a product name, a model name, a Mac address of the plurality of display devices 200, and the identification image may include at least one of a QR code, a corner symbol, a border symbol, or a barcode as an image representing an ID of the display devices 200.

The electronic device 100 may obtain the photographed image of the video wall including the plurality of display devices 200 displaying the identification image (S720). When the electronic device 100 includes the camera 150, the electronic device 100 may obtain an image by photographing the video wall directly. When the electronic device 100 does not include the camera 150, the electronic device 100 may obtain the photographed image of the video wall from the external camera.

The electronic device 100 may obtain an identification image corresponding to the layout information of the video wall and each of the plurality of display devices 200 from the photographed image (S730).

The electronic device 100 may obtain the layout information of the video wall from the photographed image through an image recognition technique. For example, the electronic device 100 may explore an entire area of the photographed image through the window sliding technique and obtain the layout information of the video wall. For example, the electronic device 100 may divide the entire area in the photographed image into n*m blocks. The electronic device 100 may scan each block using a window of a predetermined size to obtain a feature value of each block. The electronic device 100 may compare the obtained feature value of each block to obtain the layout information including the number, arrangement state information, etc. of the display devices 200. For example, the electronic device 100 may obtain layout information that the number of the plurality of display devices 200 are four and the devices are regularly arranged in the form of 2 by 2 (2x2). The window sliding technique may be an example of an image recognition technique, and may use various embodiments for obtaining layout information of the video wall using an artificial neural network.

The electronic device 100 may obtain the identification information of each of the plurality of display devices based on the mapping information and the identification image (S740). For example, the electronic device 100 may obtain the identification image through the image recognition technique. For example, when the identification image is implemented as a QR code, the electronic device 100 may obtain the identification image through a QR code reader. In addition, when the identification image is implemented as a corner symbol, the electronic device 100 may obtain the identification image based on at least one information of a size, a shape, display position, etc. of the corner symbol through the image recognition technique such as the window sliding technique.

The electronic device 100 may compare the mapping information that the identification is mapped and the obtained information of the identification image to obtain identification information of each of the plurality of display devices 200.

The electronic device 100 may obtain the arrangement stat information of the plurality of display devices 200 including the video wall based on the obtained identification information and the layout information. The arrangement state information may refer to information including both the layout information and identification information of the plurality of display devices 200. For example, it is assumed that the plurality of display devices 200 are formed as 2 by 2 (2x2). The arrangement state information may refer to information including not only layout information that the arrangement of the video wall is formed as 2 by 2 (2x2), but also in the case of an upper left display device, identification information that the display devices have a model name of Q1.

The electronic device 100 may obtain information including a screen shape, a screen size and a bezel size of a corresponding display device based on the obtained identification information, and may obtain the arrangement state information of the plurality of display devices 200 based on the obtained information and the layout information. The electronic device 100 may identify whether the plurality of display devices 200 are in a regular arrangement state or an irregular arrangement state based on the identified image obtained from the photographed image.

The electronic device 100 may display a UI for setting a content of the video wall based on the arrangement state information of the plurality of display devices 200. In addition, the electronic device 100 may identify whether the plurality of display devices 200 are in a regular arrangement state or an irregular arrangement state, and provide a candidate content corresponding to the identified arrangement state in the UI. The electronic device 100 may provide the candidate content corresponding to the identified arrangement state. Since the plurality of display devices arranged in a regular manner are appropriate for displaying one complete image, when the devices are identified as a regular arrangement state, the electronic device 100 may provide one image or a plurality of images related to each other as candidate contents. Also, since the plurality of display devices arranged in an irregular manner are appropriate for displaying an individual image, when the devices are identified as an irregular arrangement state, the electronic device 100 may provide a plurality of images as candidate contents.

The electronic device 100 may control an operation of the video wall based on the obtained arrangement state information. For example, the electronic device 100 may transmit image signals to the video wall so as to display specific contents in the plurality of display devices forming the video wall. The electronic device 100 may transmit the obtained arrangement state information to an external device 300 that controls the operation of the video wall. Thereafter, the external device 300 may transmit the image signals to the video wall so as to display the specific contents in the plurality of display devices 200.

Since detailed operations of each step have been described above, a detailed description thereof may be omitted.

At least some configurations of the methods according to various embodiments described above may be able to be installed in the existing electronic devices, and may be implemented in a form of an application which is software that may be used by a user on an operating system (OS).

At least some configurations of the methods according to the embodiments described above may be implemented by upgrading the software or hardware of the existing electronic devices.

The various embodiments described above may be executed through an embedded server in the electronic device or through at least one external server among the electronic device and the display devices.

According to an embodiment, the various embodiments described above may be implemented as software including instructions stored in a machine-readable storage media which is readable by a machine (e.g., a computer). The device may include the electronic device according to the disclosed embodiments, as a device which calls the stored instructions from the storage media and which is operable according to the called instructions. When the instructions are executed by a processor, the processor may directory perform functions corresponding to the instructions using other components or the functions may be performed under a control of the processor. The instructions may include code generated or executed by a compiler or an interpreter. The machine-readable storage media may be provided in a form of a non-transitory storage media. The 'non-transitory' means that the storage media does not include a signal and is tangible, but does not distinguish whether data is stored semi-permanently or temporarily in the storage media.

In addition, according to an embodiment, the methods according to various embodiments described above may be provided as a part of a computer program product. The computer program product may be traded between a seller and a buyer. The computer program product may be distributed in a form of the machine-readable storage media (e.g., compact disc read only memory (CD-ROM) or distributed online through an application store (e.g., PlayStore 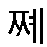 ). In a case of the online distribution, at least a portion of the computer program product may be at least temporarily stored or provisionally generated on the storage media such as a manufacturer's server, the application store's server, or a memory in a relay server.

In addition, according to an embodiment, various embodiments described above may be implemented in a recording media that may be read by a computer or a similar device to the computer by suing software, hardware, or a combination thereof. In some cases, the embodiments described herein may be implemented by the processor itself. In a software configuration, various embodiments described in the specification such as a procedure and a function may be implemented as separate software modules. The software modules may respectively perform one or more functions and operations described in the present specification.

According to various embodiments described above, computer instructions for performing processing operations of a device according to the various embodiments described above may be stored in a non-transitory computer-readable medium. The computer instructions stored in the non-transitory computer-readable medium may cause a particular device to perform processing operations on the device according to the various embodiments described above when executed by the processor of the particular device. The operations may include obtaining a photographed image of a video wall including the plurality of display devices displaying an identification image, obtaining layout information of the video wall and an identification image corresponding to the plurality of display devices, respectively, from the photographed image, obtaining identification information of each of the plurality of display devices based on the mapping information and the identification image, and obtaining arrangement state information of the plurality of display devices included in the video wall based on the obtained identification information and the layout information.

The non-transitory computer-readable medium does not refer to a medium that stores data for a short period of time, such as a register, cache, memory, etc., but semi-permanently stores data and is available of reading by the device. For example, the non-transitory computer-readable medium may be CD, DVD, a hard disc, Blu-ray disc, USB, a memory card, ROM, or the like.

According to an embodiment, the methods according to the various embodiments may be provided as a part of the computer program product. The computer program product may be traded between a seller and a buyer. The computer program product may be distributed in a form of the machine-readable storage media (e.g., compact disc read only memory (CD-ROM) or distributed online through an application store (e.g., PlayStore 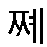 ). In a case of the online distribution, at least a portion of the computer program product may be at least temporarily stored or provisionally generated on the storage media such as a manufacturer's server, the application store's server, or a memory in a relay server.

Further, each of the components (e.g., modules or programs) according to the various embodiments described above may be composed of a single entity or a plurality of entities, and some subcomponents of the above-mentioned subcomponents may be omitted or the other subcomponents may be further included to the various embodiments. Generally, or additionally, some components (e.g., modules or programs) may be integrated into a single entity to perform the same or similar functions performed by each respective component prior to integration. Operations performed by a module, a program, or other component, according to various embodiments, may be sequential, parallel, or both, executed iteratively or heuristically, or at least some operations may be performed in a different order, omitted, or other operations may be added.

While the present disclosure has been shown and described with reference to various embodiments thereof, it will be understood by those skilled in the art that various changes in form and details may be made therein without departing from the scope of the present disclosure as defined by the appended claims.

## Claims

1. A control method of an electronic device which accesses stored mapping information in which identification information of a plurality of display devices is mapped with an identification image of the plurality of display devices, respectively, the control method comprising:
obtaining a photographed image of a video wall including the plurality of display devices displaying a respective identification image;
obtaining layout information of the video wall and the respective identification image corresponding to the plurality of display devices, from the photographed image;
obtaining identification information of the plurality of display devices, respectively, based on the mapping information and the respective identification image;
receiving screen shape and screen size of the plurality of display devices based on the obtained identification information; and
obtaining arrangement state information of the plurality of display devices included in the video wall based on the obtained identification information and the layout information;
**characterized by**:
displaying a user interface, UI, comprising a plurality of screen images corresponding to shapes and sizes of the plurality of display devices and a candidate content, for a content setting of the video wall based on the arrangement state information of the plurality of display devices; and
identifying whether the plurality of display devices are in a regular arrangement state or an irregular arrangement state, and providing the candidate content corresponding to the identified arrangement state on the UI;
when the identified arrangement state is regular, the candidate content comprises one image or a plurality of images related to each other, and when the identified arrangement is irregular, the candidate content comprises a plurality of individual images; and
wherein the plurality of screen images includes a portion of the candidate content corresponding to the relative arrangement position of each of the plurality of display devices.

2. The control method as claimed in claim 1, wherein the obtaining of the arrangement state information comprises:
obtaining information including a screen shape, a screen size and a bezel size of a corresponding display device among the plurality of display devices based on a respective identification information of the corresponding display device obtained in the obtaining of the identification information of the plurality of devices, respectively, and
obtaining the arrangement state information of the plurality of display devices based on the obtained information and the layout information.

3. The control method as claimed in claim 1, wherein the identification image includes at least one of a QR code, a corner symbol, a border symbol or a bar code.

4. The control method as claimed in claim 1, wherein the identification image is a corner symbol displayed in an edge area of the plurality of display devices, respectively; and
wherein the obtaining of the arrangement state information comprises identifying whether the plurality of display devices are in the regular arrangement state or the irregular arrangement state based on the respective identification image obtained from the photographed image.

5. The control method as claimed in claim 1, further comprising:
transmitting the obtained arrangement state information to an external device that controls an operation of the video wall.

6. An electronic device (100) comprising:
a storage (110) to store mapping information where identification information of a plurality of display devices (200) is mapped with an identification image of the plurality of display devices (200), respectively;
a display (140); and
a processor (120) configured to:
obtain a photographed image of a video wall including the plurality of display devices (200) displaying a respective identification image,
obtain layout information of the video wall and the respective identification image corresponding to the plurality of display devices, from the photographed image,
obtain identification information of the plurality of display devices, respectively, based on the mapping information and the respective identification image,
receive screen shape and screen size of the plurality of display devices based on the obtained identification information, and
obtain arrangement state information of the plurality of display devices included in the video wall based on the obtained identification information and the layout information;
**characterized by**:
wherein the processor (120) is configured to control the display to display a user interface, UI, comprising a plurality of screen images corresponding to shapes and sizes of the plurality of display devices (200) and a candidate content, for setting a content of the video wall based on the arrangement state information of the plurality of display devices (200); and
wherein the processor (120) is configured to identify whether the plurality of display devices (200) are in a regular arrangement state or an irregular arrangement state, and provide the candidate content corresponding to the identified arrangement state on the UI;
when the identified arrangement state is regular, the candidate content comprises one image or a plurality of images related to each other, and when the identified arrangement is irregular, the candidate content comprises a plurality of individual images; and
wherein the plurality of screen images includes a portion of the candidate content corresponding to the relative arrangement position of each of the plurality of display devices (200).

7. The electronic device (100) as claimed in claim 6, wherein the processor (120) is configured to:
obtain information including a screen shape, a screen size and a bezel of a corresponding display device among the plurality of display devices (200) based on a respective identification information of the corresponding display device obtained in the obtaining of the identification information of the plurality of devices (200), respectively, and
obtain the arrangement state information of the plurality of display devices (200) based on the obtained information and the layout information.

8. The electronic device (100) as claimed in claim 6, wherein the identification image is configured to include at least any one of a QR code, a corner symbol, a border symbol or a bar code.

9. The electronic device (100) as claimed in claim 6, wherein the identification image is a corner symbol displayed in an edge area of the plurality of display devices (200), respectively; and
wherein the processor (120) is configured to identify whether the plurality of display devices (200) are in the regular arrangement state or the irregular arrangement state based on the respective identification image obtained from the photographed image.

10. The electronic device (100) as claimed in claim 6, further comprising:
a communicator (130),
wherein the processor (120) is configured to control the communicator (130) to transmit the obtained arrangement state information to an external device that controls an operation of the video wall.

11. An electronic system (1000), comprising:
a video wall system configured to include a plurality of display devices (200) which are configured to obtain a respective identification image based on a predetermined event; and
an electronic device (100) according to any of claims 6 to 10.

## Patentansprüche

1. Steuerungsverfahren einer elektronischen Vorrichtung, die auf gespeicherte Zuordnungsinformationen zugreift, in denen Identifikationsinformationen einer Vielzahl von Anzeigevorrichtungen jeweils einem Identifikationsbild der Vielzahl von Anzeigevorrichtungen zugeordnet werden, wobei das Steuerungsverfahren Folgendes umfasst:
Erhalten eines fotografierten Bildes einer Videowand, welche die Vielzahl von Anzeigevorrichtungen beinhaltet, die ein jeweiliges Identifikationsbild anzeigen;
Erhalten von Layoutinformationen der Videowand und des jeweiligen Identifikationsbilds, das der Vielzahl von Anzeigevorrichtungen entspricht, von dem fotografierten Bild;
Erhalten von Identifikationsinformationen der Vielzahl von Anzeigevorrichtungen jeweils auf Grundlage der Zuordnungsinformationen und des jeweiligen Identifikationsbilds;
Empfangen von Bildschirmform und Bildschirmgröße der Vielzahl von Anzeigevorrichtungen auf Grundlage der erhaltenen Identifikationsinformationen; und
Erhalten von Anordnungszustandsinformationen der Vielzahl von Anzeigevorrichtungen, die in der Videowand beinhalten sind, auf Grundlage der erhaltenen Identifikationsinformationen und der Layoutinformationen;
**gekennzeichnet durch**:
Anzeigen einer Benutzeroberfläche, UI, die eine Vielzahl von Bildschirmbildern, die Formen und Größen der Vielzahl von Anzeigevorrichtungen entsprechen, und einen Kandidateninhalt für eine Inhaltseinstellung der Videowand auf Grundlage der Anordnungszustandsinformationen der Vielzahl von Anzeigevorrichtungen umfasst; und
Identifizieren, ob sich die Vielzahl von Anzeigevorrichtungen in einem regelmäßigen Anordnungszustand oder einem unregelmäßigen Anordnungszustand befindet, und Bereitstellen des Kandidateninhalts, der dem identifizierten Anordnungszustand entspricht, auf der UI;
wenn der identifizierte Anordnungszustand regelmäßig ist, umfasst der Kandidateninhalt ein Bild oder eine Vielzahl von Bildern, die miteinander in Beziehung stehen, und wenn die identifizierte Anordnung unregelmäßig ist, umfasst der Kandidateninhalt eine Vielzahl von Einzelbildern; und
wobei die Vielzahl von Bildschirmbildern einen Teil des Kandidateninhalts beinhaltet, welcher der relativen Anordnungsposition jeder der Vielzahl von Anzeigevorrichtungen entspricht.

2. Steuerungsverfahren nach Anspruch 1, wobei das Erhalten der Anordnungszustandsinformationen Folgendes umfasst:
Erhalten von Informationen, die eine Bildschirmform, eine Bildschirmgröße und eine Blendengröße einer entsprechenden Anzeigevorrichtung aus der Vielzahl von Anzeigevorrichtungen beinhalten, auf Grundlage von jeweiligen Identifikationsinformationen der entsprechenden Anzeigevorrichtung, die jeweils beim Erhalten der Identifikationsinformationen der Vielzahl von Vorrichtungen erhalten werden, und
Erhalten der Anordnungszustandsinformationen der Vielzahl von Anzeigevorrichtungen auf Grundlage der erhaltenen Informationen und der Layoutinformationen.

3. Steuerungsverfahren nach Anspruch 1, wobei das Identifikationsbild mindestens eines von einem QR-Code, einem Ecksymbol, einem Rahmensymbol oder einem Barcode beinhaltet.

4. Steuerungsverfahren nach Anspruch 1, wobei das Identifikationsbild jeweils ein Ecksymbol ist, das in einem Randbereich der Vielzahl von Anzeigevorrichtungen angezeigt wird; und
wobei das Erhalten der Anordnungszustandsinformationen Identifizieren, ob sich die Vielzahl von Anzeigevorrichtungen in dem regelmäßigen Anordnungszustand oder dem unregelmäßigen Anordnungszustand befindet, auf Grundlage des jeweiligen Identifikationsbilds, das von dem fotografierten Bild erhalten wird, umfasst.

5. Steuerungsverfahren nach Anspruch 1, ferner umfassend:
Übertragen der erhaltenen Anordnungszustandsinformationen an eine externe Vorrichtung, die einen Betrieb der Videowand steuert.

6. Elektronische Vorrichtung (100), umfassend:
einen Speicher (110) zum Speichern von Zuordnungsinformationen, wobei Identifikationsinformationen einer Vielzahl von Anzeigevorrichtungen (200) jeweils einem Identifikationsbild der Vielzahl von Anzeigevorrichtungen (200) zugeordnet sind;
eine Anzeige (140); und
einen Prozessor (120), der zu Folgendem konfiguriert ist:
Erhalten eines fotografierten Bildes einer Videowand, welche die Vielzahl von Anzeigevorrichtungen (200) beinhaltet, die ein jeweiliges Identifikationsbild anzeigen,
Erhalten von Layoutinformationen der Videowand und des jeweiligen Identifikationsbilds, das der Vielzahl von Anzeigevorrichtungen entspricht, von dem fotografierten Bild,
Erhalten von Identifikationsinformationen der Vielzahl von Anzeigevorrichtungen jeweils auf Grundlage der Zuordnungsinformationen und des jeweiligen Identifikationsbilds,
Empfangen von Bildschirmform und Bildschirmgröße der Vielzahl von Anzeigevorrichtungen auf Grundlage der erhaltenen Identifikationsinformationen und
Erhalten von Anordnungszustandsinformationen der Vielzahl von Anzeigevorrichtungen, die in der Videowand beinhalten sind, auf Grundlage der erhaltenen Identifikationsinformationen und der Layoutinformationen;
**gekennzeichnet durch**:
wobei der Prozessor (120) dazu konfiguriert ist, die Anzeige zu steuern, um eine Benutzerschnittstelle, UI, anzuzeigen, die eine Vielzahl von Bildschirmbildern, die Formen und Größen der Vielzahl von Anzeigevorrichtungen (200) entsprechen, und einen Kandidateninhalt zum Einstellen eines Inhalts der Videowand auf Grundlage der Anordnungszustandsinformationen der Vielzahl von Anzeigevorrichtungen (200) umfasst; und
wobei der Prozessor (120) dazu konfiguriert ist, zu identifizieren, ob sich die Vielzahl von Anzeigevorrichtungen (200) in einem regulären Anordnungszustand oder einem unregelmäßigen Anordnungszustand befindet, und den Kandidateninhalt, der dem identifizierten Anordnungszustand entspricht, auf der Benutzeroberfläche bereitzustellen;
wenn der identifizierte Anordnungszustand regelmäßig ist, umfasst der Kandidateninhalt ein Bild oder eine Vielzahl von Bildern, die miteinander in Beziehung stehen, und wenn die identifizierte Anordnung unregelmäßig ist, umfasst der Kandidateninhalt eine Vielzahl von Einzelbildern; und
wobei die Vielzahl von Bildschirmbildern einen Teil des Kandidateninhalts beinhaltet, welcher der relativen Anordnungsposition jeder der Vielzahl von Anzeigevorrichtungen (200) entspricht.

7. Elektronische Vorrichtung (100) nach Anspruch **6,** wobei der Prozessor (120) zu Folgendem konfiguriert ist:
Erhalten von Informationen, die eine Bildschirmform, eine Bildschirmgröße und eine Blende einer entsprechenden Anzeigevorrichtung aus der Vielzahl von Anzeigevorrichtungen (200) beinhalten, auf Grundlage jeweiligen Identifikationsinformationen der entsprechenden Anzeigevorrichtung, die jeweils beim Erhalten der Identifikationsinformationen der Vielzahl von Vorrichtungen (200) erhalten werden, und
Erhalten der Anordnungszustandsinformationen der Vielzahl von Anzeigevorrichtungen (200) auf Grundlage der erhaltenen Informationen und der Layoutinformationen.

8. Elektronische Vorrichtung (100) nach Anspruch 6, wobei das Identifikationsbild dazu konfiguriert ist, mindestens eines von einem QR-Code, einem Ecksymbol, einem Rahmensymbol oder einem Barcode zu beinhalten.

9. Elektronische Vorrichtung (100) nach Anspruch 6, wobei das Identifikationsbild jeweils ein Ecksymbol ist, das in einem Randbereich der Vielzahl von Anzeigevorrichtungen (200) angezeigt wird; und
wobei der Prozessor (120) dazu konfiguriert ist, auf Grundlage des jeweiligen Identifikationsbilds, das von dem fotografierten Bild erhalten wird, zu identifizieren, ob sich die Vielzahl von Anzeigevorrichtungen (200) in dem regelmäßigen Anordnungszustand oder dem unregelmäßigen Anordnungszustand befindet.

10. Elektronische Vorrichtung (100) nach Anspruch 6, ferner umfassend:
einen Kommunikator (130),
wobei der Prozessor (120) dazu konfiguriert ist, den Kommunikator (130) zu steuern, um die erhaltenen Anordnungszustandsinformationen an eine externe Vorrichtung zu übertragen, die einen Betrieb der Videowand steuert.

11. Elektronisches System (1000), umfassend:
ein Videowandsystem, das dazu konfiguriert ist, eine Vielzahl von Anzeigevorrichtungen (200) zu beinhalten, die dazu konfiguriert sind, ein jeweiliges Identifikationsbild auf Grundlage eines vorbestimmten Ereignisses zu erhalten; und
eine elektronische Vorrichtung (100) nach einem der Ansprüche 6 bis 10.

## Revendications

1. Procédé de commande d'un dispositif électronique qui accède à des informations de mappage stockées où des informations d'identification d'une pluralité de dispositifs d'affichage sont mappées avec une image d'identification de la pluralité de dispositifs d'affichage, respectivement, le procédé de commande comprenant :
l'obtention d'une image photographiée d'un mur vidéo comprenant la pluralité de dispositifs d'affichage affichant une image d'identification respective ;
l'obtention d'informations de disposition du mur vidéo et de l'image d'identification respective correspondant à la pluralité de dispositifs d'affichage, à partir de l'image photographiée ;
l'obtention d'informations d'identification de la pluralité de dispositifs d'affichage, respectivement, sur la base des informations de mappage et de l'image d'identification respective ;
la réception d'une forme et d'une taille d'écran de la pluralité de dispositifs d'affichage sur la base des informations d'identification obtenues ; et
l'obtention d'informations d'état d'agencement de la pluralité de dispositifs d'affichage compris dans le mur vidéo sur la base des informations d'identification obtenues et des informations de disposition ;
**caractérisé par** :
l'affichage d'une interface utilisateur, UI, comprenant une pluralité d'images d'écran correspondant aux formes et aux tailles de la pluralité de dispositifs d'affichage et d'un contenu candidat, pour un réglage de contenu du mur vidéo sur la base des informations d'état d'agencement de la pluralité de dispositifs d'affichage ; et
l'identification du fait que la pluralité de dispositifs d'affichage se trouve dans un état d'agencement régulier ou dans un état d'agencement irrégulier, et la fourniture du contenu candidat correspondant à l'état d'agencement identifié sur l'UI ;
lorsque l'état d'arrangement identifié est régulier, le contenu candidat comprend une image ou une pluralité d'images liées les unes aux autres, et lorsque l'arrangement identifié est irrégulier, le contenu candidat comprend une pluralité d'images individuelles ; et
dans lequel la pluralité d'images d'écran comprend une partie du contenu candidat correspondant à la position d'agencement relative de chacun de la pluralité de dispositifs d'affichage.

2. Procédé de commande selon la revendication 1, dans lequel l'obtention des informations d'état d'agencement comprend :
l'obtention d'informations comprenant une forme d'écran, une taille d'écran et une taille de cadre d'un dispositif d'affichage correspondant parmi la pluralité de dispositifs d'affichage sur la base d'une information d'identification respective du dispositif d'affichage correspondant obtenue lors de l'obtention des informations d'identification de la pluralité de dispositifs, respectivement, et
l'obtention des informations d'état d'agencement de la pluralité de dispositifs d'affichage sur la base des informations obtenues et des informations de disposition.

3. Procédé de commande selon la revendication 1, dans lequel l'image d'identification comprend au moins l'un parmi un code QR, un symbole de coin, un symbole de bordure ou un code-barres.

4. Procédé de commande selon la revendication 1, dans lequel l'image d'identification est un symbole de coin affiché dans une zone de bord de la pluralité de dispositifs d'affichage, respectivement ; et
dans lequel l'obtention des informations d'état d'agencement comprend l'identification du fait que la pluralité de dispositifs d'affichage se trouve dans l'état d'agencement régulier ou dans l'état d'agencement irrégulier sur la base de l'image d'identification respective obtenue à partir de l'image photographiée.

5. Procédé de commande selon la revendication 1, comprenant en outre :
la transmission des informations d'état d'agencement obtenues à un dispositif externe qui commande un fonctionnement du mur vidéo.

6. Dispositif électronique (100) comprenant :
une mémoire (110) pour stocker des informations de mappage où des informations d'identification d'une pluralité de dispositifs d'affichage (200) sont mappées avec une image d'identification de la pluralité de dispositifs d'affichage (200), respectivement ;
un affichage (140) ; et
un processeur (120) conçu pour :
obtenir une image photographiée d'un mur vidéo comprenant la pluralité de dispositifs d'affichage (200) affichant une image d'identification respective,
obtenir des informations de disposition du mur vidéo et de l'image d'identification respective correspondant à la pluralité de dispositifs d'affichage, à partir de l'image photographiée,
obtenir des informations d'identification de la pluralité de dispositifs d'affichage, respectivement, sur la base des informations de mappage et de l'image d'identification respective,
recevoir une forme et **d'une** taille **d'écran** de la pluralité de dispositifs **d'affichage** sur la base des informations d'identification obtenues, et
obtenir des informations d'état d'agencement de la pluralité de dispositifs d'affichage compris dans le mur vidéo sur la base des informations d'identification obtenues et des informations de disposition ;
**caractérisé par** :
dans lequel le processeur (120) est conçu pour commander à l'affichage d'afficher une interface utilisateur, UI, comprenant une pluralité d'images d'écran correspondant à des formes et à des tailles de la pluralité de dispositifs d'affichage (200) et un contenu candidat, pour définir un contenu du mur vidéo sur la base des informations d'état d'agencement de la pluralité de dispositifs d'affichage (200) ; et
dans lequel le processeur (120) est conçu pour identifier si la pluralité de dispositifs d'affichage (200) se trouve dans un état d'agencement régulier ou dans un état d'agencement irrégulier, et pour fournir le contenu candidat correspondant à l'état d'agencement identifié sur l'UI ;
lorsque l'état d'arrangement identifié est régulier, le contenu candidat comprend une image ou une pluralité d'images liées les unes aux autres, et lorsque l'arrangement identifié est irrégulier, le contenu candidat comprend une pluralité d'images individuelles ; et
dans lequel la pluralité d'images d'écran comprend une partie du contenu candidat correspondant à la position d'agencement relative de chacun de la pluralité de dispositifs d'affichage (200).

7. Dispositif électronique (100) selon la revendication 6, dans lequel le processeur (120) est conçu pour :
obtenir des informations comprenant une forme d'écran, une taille d'écran et un cadre d'un dispositif d'affichage correspondant parmi la pluralité de dispositifs d'affichage (200) sur la base d'une information d'identification respective du dispositif d'affichage correspondant obtenue lors de l'obtention des informations d'identification de la pluralité de dispositifs (200), respectivement, et
obtenir les informations d'état d'agencement de la pluralité de dispositifs d'affichage (200) sur la base des informations obtenues et des informations de disposition.

8. Dispositif électronique (100) selon la revendication 6, dans lequel l'image d'identification est conçue pour comprendre au moins l'un quelconque parmi un code QR, un symbole de coin, un symbole de bordure ou un code-barres.

9. Dispositif électronique (100) selon la revendication 6, dans lequel l'image d'identification est un symbole de coin affiché dans une zone de bord de la pluralité de dispositifs d'affichage (200), respectivement ; et
dans lequel le processeur (120) est conçu pour identifier si la pluralité de dispositifs d'affichage (200) se trouve dans l'état d'agencement régulier ou dans l'état d'agencement irrégulier sur la base de l'image d'identification respective obtenue à partir de l'image photographiée.

10. Dispositif électronique (100) selon la revendication 6, comprenant en outre :
une unité de communication (130),
dans lequel le processeur (120) est conçu pour commander à l'unité de communication (130) de transmettre les informations d'état d'agencement obtenues à un dispositif externe qui commande un fonctionnement du mur vidéo.

11. Système électronique (1000), comprenant :
un système de mur vidéo conçu pour comprendre une pluralité de dispositifs d'affichage (200) qui sont conçus pour obtenir une image d'identification respective sur la base d'un événement prédéterminé ; et
un dispositif électronique (100) selon l'une quelconque des revendications 6 à 10.
